# EUROPEAN PATENT SPECIFICATION

(11) **EP 1 130 959 B1**
(45) Date of publication and mention of the grant of the patent: **02.05.2003**
(21) Application number: 00960835.7
(22) Date of filing: 15.09.2000
(51) Int. Cl.: A01K 45/00, E02B 15/02

(54) **BIRDBATH**
VOGELBAD
BAIN D'OISEAUX

(30) Priority: 16.09.1999 GB 9921860
(43) Date of publication of application: 12.09.2001
(73) Proprietor: Carver plc, Walsall, West Midlands WS9 8QD (GB)
(72) Inventor: WRIGHT, Alan Thomas, Wolverhampton WV8 1RQ (GB)
(74) Representative: Croft, Michael John
(86) International application number: GB0003548
(87) International publication number: WO01019179

(56) References cited:
- EP-A- 0 942 101
- WO-A-85/00978
- DE-A- 4 034 933
- DE-U- 9 108 622
- DE-U- 9 217 135
- US-A- 2 454 091
- US-A- 2 583 911
- US-A- 4 286 546

## Description

This invention relates to birdbaths.

Conventional birdbaths are usually designed to stand on the ground and as a result have a number of disadvantages. Other animals have easy access to them and can drink the birds' water. Predators can attack birds when they are bathing and drinking. Birdbaths generally have the disadvantage that they need to be constantly replenished with water and the water in them freezes in winter so that birds lose what may be their only source of drinking water in the locality. A floating birdbath is known from document DE-A-4 034 933. A device which floats on water and incorporates heating means is known from document US-A-2 454 091.

The object of the present invention is to provide a new or improved form of birdbath. A particular aim of the invention is to overcome the disadvantages referred to above.

According to the invention there is provided a device which is adapted to float on water, as specified in independent claim 1.

The idea of the invention is that the birdbath may be floated on a garden pond (or other body of water) and provided it remains at a distance from the side of the pond the surrounding water in the pond will prevent animals gaining direct access to the birdbath and taking water from it and attacking birds bathing or drinking in the birdbath.

Preferably the birdbath is designed so that it remains in a stable position when small birds land on it but it becomes unstable and as a result tilts if a heavier bird or other animal tries to stand on the birdbath, for example by stepping or jumping on to it from the pond side or landing on it, the birdbath being designed automatically to return to its stable position when the weight of a heavier bird or other animal is removed from it. Heavier birds and other animals are therefore prevented from standing on the birdbath and drinking the water or attacking smaller birds using the birdbath.

The birdbath is preferably formed with at least one hole through which water can flow from the pond (or other body of water) into the birdbath so as to maintain the level of water in the birdbath. It is therefore not necessary to top up the water in the birdbath as the water level falls.

The birdbath incorporates heating means arranged and operable to heat water in the birdbath. When operative, therefore, the heating means prevents water in the birdbath freezing so that it is available for bathing and drinking. In addition, the arrangement is such that the birdbath also acts as a de-icer, preventing the water in the pond (or other body of water) beneath the birdbath from freezing and thereby preventing the formation of a solid mass of ice over the whole surface of the pond which could kill fish or amphibians in the pond due to an accumulation of toxic methane gas beneath the ice.

The invention also provides in combination with the birdbath a support adapted to hold an open reservoir of water in which the birdbath may be floated. This combination may be used by people without ponds as it in effect provides its own pond.

The support may be in the form of a stand or it may be formed to rest directly on the ground. It may have an open-topped container for holding the reservoir of water. This container is preferably larger than the birdbath and may be of any appropriate shape, for example circular or rectangular.

In this case it may be necessary to replenish the reservoir, particularly in times of drought, but this will not have to be done as frequently as it is necessary to top up conventional birdbaths. Otherwise the combination has all the advantages of a birdbath according to the invention which is floated on a pond.

The birdbath may be designed to provide a feeding facility for birds or/and amphibians or/and shelter or protection for birds or/and amphibians. For example, it may carry a wire mesh container for nuts which birds can peck or/and a cover under which birds can shelter or an enclosure in which birds and amphibians such as frogs can shelter.

Indeed, the concept of the invention may also be applied to devices which are designed to provide drinking or/and feeding facilities or/and shelter or protection for birds or amphibians.

The invention will now be described, by way of example, with reference to the accompanying drawings, in which:
FIGURE 1 is a perspective view of a preferred form of birdbath embodying the invention,
FIGURE 2 is a diametral section through the birdbath, and
FIGURE 3 shows the birdbath floating on a pond.

The birdbath illustrated in the drawings comprises a body 1 which is formed in one piece. The body may be vacuum formed of a plastics material. The body is generally dish-shaped comprising a concave portion 2 having a flat central portion 3 surrounded by an annular channel-shaped portion 4, the concave portion having a depending lip 5 around its perimeter. The body is formed of a lightweight material and the shape of the body, particularly the annular channel-shaped portion 4 and the lip 5, give it strength and rigidity.

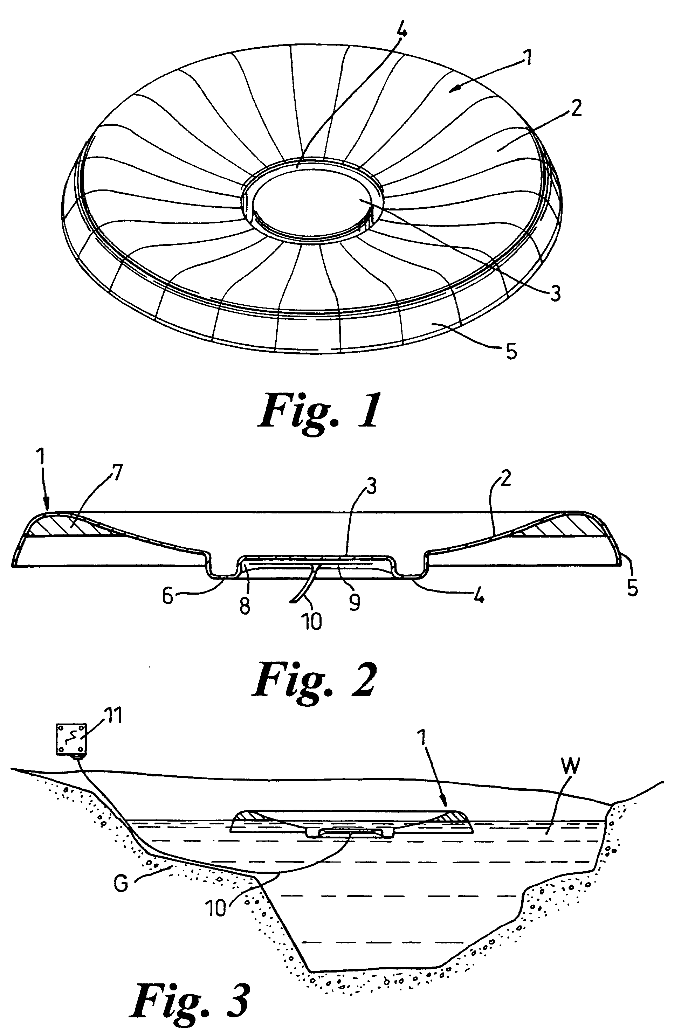

The body 1 may be floated on the surface of a pond or another body of water, for example a reservoir of water held by a support as described above. In Figure 3 of the drawings the body 1 is shown floating on the surface of a pool of water W contained in a hollow in the ground G.

The channel-shaped portion 4 of the body is formed with an annular series of spaced holes 6 so that water flows into the central part of the body until it reaches the same level as the water W, thereby forming a shallow body of water in which birds may bathe and from which they may drink. Water flows through the holes 6 to maintain the level of the water in the birdbath as water is taken from it.

The annular recess formed beneath the part of the body 1 where the concave portion 2 joins the lip 5 is filled with a buoyant material such as foam plastics 7 to assist the buoyancy of the body 1, the foam plastics providing a downwardly facing annular surface which contacts the water in the pond. The foam plastics may be an annular moulding glued or cemented to the body. The birdbath is designed to remain in a stable floating position when smaller birds land on it. However, if the birdbath is subjected to the weight of a larger bird or other animal, it tilts and becomes unstable. Larger birds and other animals cannot therefore stand on the birdbath and attack birds using the bath. When the heavier weight is removed the birdbath rights itself and resumes its stable floating position.

The recess formed beneath the body 1 by the central portion 3 and the surrounding channel 4 is filled with a water resistant epoxy resin 8 capable of conducting heat. Encapsulated in this resin is an electric heating foil 9 connected by a flexible electric cable 10 and an electricity connection box 11 to an appropriate source of electricity, for example a 230 volt/21 watt supply, which may be the supply otherwise used for an existing pond pump, filter or fountain. The foil comprises a heat resistant sheet coated with an ink of a high electrical resistance.

The supply of electricity to the heating foil is controlled by a manual switch and/or a thermostat, the intention being that the foil will be switched on when the ambient temperature or the temperature of the water in the pond falls to a value near freezing point, or the heater may be left on for the whole of the winter. As a result, the water in the birdbath is prevented from freezing by the heat emitted by the heating foil and also the water in the pond beneath the birdbath is prevented from freezing. Therefore the birdbath not only serves as a birdbath but also acts as a pond de-icer.

## Claims

1. A device which is adapted to float on water and comprises a body (1) provided with heating means (9) arranged and operable to prevent water beneath the body from freezing, **characterised in that** the said body (1) is formed to provide a birdbath, the said heating means (9) being arranged and operable to heat water in the birdbath.

2. A device as claimed in Claim 1 which is designed so that it remains in a stable position when small birds land on it but it becomes unstable and as a result tilts if a heavier bird or other animal tries to stand on it, the device being designed automatically to return to its stable position when the weight of a heavier bird or other animal is removed from it.

3. A device as claimed in Claim 1 or 2 in which the body (1) is formed with at least one hole (6) through which water can flow from the pond or other body of water on which the device is floated, into the birdbath so as to maintain the level of water in the birdbath.

4. A device as claimed in Claim 1, 2 or 3 which is combined with a support adapted to hold an open reservoir of water in which the device may be floated.

5. A device as claimed in Claim 4 in which the support is in the form of a stand or is formed to rest directly on the ground and has an open-topped container for holding the reservoir of water.

6. A device as claimed in any one of the preceding claims in which the body (1) is made of a material such that it will float on water, the body comprising a generally dish-shaped portion (2) having a depending lip (5) around its perimeter and a central portion (3) surrounded by an annular channel-shaped portion (4).

7. A device as claimed in Claims 3 and 6 wherein the said hole or holes (6) is or are formed in the said channel-shaped portion (4).

8. A device as claimed in Claim 6 or 7 wherein the said heating means (9) are disposed in the recess formed beneath the body (1) by the central portion (3) and the surrounding channel-shaped portion (4).

9. A device as claimed in Claim 6, 7 or 8 wherein the recess formed beneath the body by the generally dish-shaped portion (2) and the lip (5) is filled with a buoyant material (7).

## Patentansprüche

1. Auf dem Wasser schwimmende Vorrichtung mit einem Körper (1), der mit einer Heizeinrichtung (9) ausgestattet ist, die so angeordnet und betreibbar ist, daß das Wasser unter dem Boden des Körpers daran gehindert wird, zu gefrieren, **dadurch gekennzeichnet, daß** der Körper ein Vogelbad bildet und die Heizeinrichtung (9) so angeordnet und betreibbar ist, daß sie Wasser in dem Vogelbad erwärmt.

2. Vorrichtung nach Anspruch 1, die so beschaffen ist, daß sie in einer stabilen Lage bleibt, wenn kleine Vögel auf ihr landen, jedoch instabil wird und infolgedessen kippt, wenn ein schwerer Vogel oder ein anderes Tier auf ihr Fuß zu fassen versucht, wobei die Vorrichtung so beschaffen ist, daß sie automatisch in ihre stabile Lage zurückkehrt, sobald das Gewicht eines schweren Vogels oder eines anderen Tieres von ihr entfernt wird.

3. Vorrichtung nach Anspruch 1 oder 2, bei der der Körper (1) mit wenigstens einem Loch versehen ist, durch das Wasser aus dem Teich oder einem anderen Wasser enthaltenden Gefäß, auf dem die Vorrichtung schwimmt, in das Vogelbad einströmen kann, um den Wasserspiegel in dem Vogelbad beizubehalten.

4. Vorrichtung nach Anspruch 1, 2 oder 3, die mit einem Träger kombiniert ist, der in der Lage ist, ein offenes Wasserreservoir zu halten, in dem die Vorrichtung schwimmen kann.

5. Vorrichtung nach Anspruch 4, bei der der Träger die Form einer Stütze hat oder so ausgebildet ist, daß er direkt auf dem Boden sitzt und einen oben offenen Behälter zur Aufnahme des Wasserreservoirs aufweist.

6. Vorrichtung nach einem der vorhergehenden Ansprüche, wobei der Körper (1) aus einem Material gefertigt ist, das auf Wasser schwimmen kann und der Körper einen im allgemeinen tellerförmigen Teil (2) aufweist, der rund um seinen Umfang eine nach unten ragende Lippe besitzt sowie einen mittleren Teil (3), welcher von einem ringförmigen kanalförmigen Teil (4) umgeben ist.

7. Vorrichtung nach den Ansprüchen 3 und 6, wobei das Loch oder die Löcher (6) in dem kanalförmigen Teil (4) ausgebildet ist bzw. sind.

8. Vorrichtung nach Anspruch 6 oder 7, wobei die Heizeinrichtung (9) in der Aussparung angeordnet ist, die sich unterhalb des Körpers (1) befindet und durch den Mittelteil (3) und den umgebenden kanalförmigen Teil (4) gebildet wird.

9. Vorrichtung nach Anspruch 6, 7 oder 8, wobei die Aussparung, die unterhalb des Körpers (3) durch den in etwa tellerförmigen Teil (2) und die Lippe (5) gebildet wird, mit einem Auftriebsmaterial (7) gefüllt ist.

## Revendications

1. Dispositif conçu pour flotter sur l'eau et comprenant un corps (1) qui comprend des moyens de chauffage (9) disposés et pouvant être actionnés de manière à empêcher l'eau de geler sous le corps, lequel dispositif est **caractérisé en ce que** ledit corps (1) est formé de manière à définir un bain pour oiseaux, tandis que les moyens de chauffage (9) sont disposés et peuvent être actionnés de manière à chauffer l'eau du bain pour oiseaux.

2. Dispositif, tel que revendiqué dans la revendication 1, conçu de manière à ce qu'il reste en position stable lorsque des oiseaux de petite taille y atterrissent dessus, mais de manière à ce qu'il devienne instable et bascule lorsque des oiseaux plus lourds ou d'autres animaux essayent de se tenir dessus, lequel dispositif est conçu de manière à reprendre automatiquement sa position stable lorsque le poids d'un oiseau plus lourd ou d'un autre animal en est retiré.

3. Dispositif, tel que revendiqué dans la revendication 1 ou 2, dans lequel le corps (1) comprend au moins un trou (6) à travers lequel de l'eau peut s'écouler depuis la marre, où depuis tout autre volume d'eau, sur lequel flotte le dispositif, et pénétrer dans le bain pour oiseaux de manière à maintenir le niveau d'eau dans ce dernier.

4. Dispositif, tel que revendiqué dans la revendication 1, 2 ou 3, combiné à un support conçu pour contenir un réservoir d'eau ouvert dans lequel ledit dispositif peut flotter.

5. Dispositif, tel que revendiqué dans la revendication 4, dans lequel le support se présente sous forme d'un montant ou vient reposer directement sur le sol, et comprend un conteneur dont le haut est ouvert et qui contient un réservoir d'eau.

6. Dispositif, tel que revendiqué dans l'une quelconque des revendications précédentes, dans lequel le corps (1) est fait d'un matériau tel qu'il va flotter sur l'eau, le corps comprenant une partie globalement en forme de disque (2) comportant une lèvre attenante (5) sur tout son périmètre, ainsi qu'une partie centrale (3) entourée par une partie annulaire en forme de canal (4).

7. Dispositif, tel que revendiqué dans les revendications 3 et 6, dans lequel ledit trou ou lesdits trous (6) sont formés dans la partie en forme de canal (4).

8. Dispositif, tel que revendiqué dans les revendications 6 ou 7, dans lequel lesdits moyens de chauffage (9) sont disposés dans un renfoncement formé en dessous du corps (1) par la partie centrale (3) et la partie en forme de disque (4) qui l'entoure.

9. Dispositif, tel que revendiqué dans les revendications 6, 7 ou 8, dans lequel le renfoncement formé en dessous du corps par la partie globalement en forme de disque (2) et la lèvre (5) est rempli d'un matériau de flottaison.
